Europäisches Patentamt

European Patent Office

Office européen des brevets

(11) Publication number: **0 140 719**
A1

# EUROPEAN PATENT APPLICATION

(21) Application number: **84401538.8**

(22) Date of filing: **20.07.84**

(51) Int. Cl.⁴: **B 29 C 49/02**

(30) Priority: **22.07.83 JP 133756/83**

(43) Date of publication of application: **08.05.85**
**Bulletin 85/19**

(84) Designated Contracting States: **AT BE CH DE FR GB IT LI NL SE** ·

(71) Applicant: **NISSEI ASB MACHINE CO., LTD., 6100-1, Ohazaminamijo Sakakimachi, Hanishina-gun Nagano-ken (JP)**

(72) Inventor: **Aoki, Daiichi, 6037, Ohazaminamijo, Sakakimachi, Hanishina-gun, Nagano-ken (JP)**

(74) Representative: **Schrimpf, Robert et al, Cabinet Regimbeau 26, Avenue Kléber, F-75116 Paris (FR)**

(54) **Method for manufacturing synthetic resin can bodies.**

(57) The present invention provides an inexpensive method for manufacturing synthetic resin can bodies, the method comprising the steps of molding a preform with a bottom formed of thermoplastic synthetic resin such as polyethyleneterephthalate; stretch blow molding a bottlelike intermediate member in which an upper end (5) of a body portion (4a) is outwardly extended from the preform; and cutting the intermediate member at the extended portion top form a can body in which a body portion having at least a laterally directed open edge by a lower side of the extended portion and a bottom are integrally formed.

ACTORUM AG

1

SPECIFICATION

1. TITLE OF THE INVENTION

METHOD FOR MANUFACTURING SYNTHETIC RESIN CAN BODIES

2. BACKGROUND OF THE INVENTION

(1) Field of the Invention

This invention relates to a method for manufacturing a can body capable of seaming a metal cover thereon from a synthetic resin parison which is injection molded by making use of a stretch blow molding method.

(2) Description of the Prior Art

Cans in which a metal cover is attached to a can body made of thermoplastic synthetic resin are generally used as containers for candies or the like. Such cans as described above have been tried by some field for use as containers for fruit juice, carbonated beverages, sake, beer, etc.

Since conventional synthetic resin can bodies are obtained by vacuum molding a film, there is a great loss of material, and in terms of gas permeability, a film as a container cannot be used without modification. In view of the foregoing, an attempt has been made to solve the gas permeability by use of polyethylene terephthalate

2

film. However, there were disadvantages in that moldability is poor and cost is high.

On the other hand, in the field of containers such as bottles, development of containers by stretch blow molding has been progressed for the purpose of reducing weight of containers, enhancing shock resistance and reducing costs. Bottles formed of thermoplastic resins such as polyethylene terephthalate, vinyl chloride, etc. have sufficiently accomplished their object and are used as various containers. Particularly, bottles obtained by stretch blow molding polyethylene terephthalate are excellent in gas permeability by biaxial orientation and have stiffness, and therefore, these bottles are now widely used as containers for fruit juice, sake, beer and the like in addition to carbonated beverages.

These cntainers by stretch blow molding are molded, during the process of molding, by holding a mouth portion, which is generally called as a neck portion or a lip portion, of a parison having a bottom extruded or injection molded, and said holding portion cannot be stretched into a thin wall-thickness. Therefore, the mouth portion of the parison is merely extruded or injection molded but not oriented, thus deteriorating the strength and having a thick wall-thickness and being hard. Thus, if a peripheral edge of a metal cover placed on the mouth portion is rolled and seamed together with a flange around the mouth portion similarly to the case of a metal can body, the flange is broken from a bended portion to make it very difficult to obtain a complete seam.

However, body walls of a container sufficiently stretched can withstand even bending stress and can bend similarly to a sheet metal. Therefore, if a flange around the mouth portion is subjected to biaxial orientation by some means or other, or if the flange is formed by a biaxially orientated portion, it becomes possible to seam the metal cover and flange by rolling. Under these circumstances, a bottle-like intermediate member is stretch blow molded from a parison, a body portion of the intermediate member is cut, a biaxially oriented flange is formed in the periphery of an open portion, and a synthetic resin can body is obtained in which a metal cover may be rolled by the flange.

Where the intermediate member is cut at the body portion, there poses a diadvantage in that there is a great loss in material used therefor. The reason is that the aforesaid can body is formed by a lower half of the intermediate member, and other portions of the intermediate member are disposed as material loss.

This material loss can be prevented by molding the intermediate member longer than a normal bottle, and

0140719

after cutting, using an upper portion of the intermediate member as a container such as a bottle. In this case, however, there is a limitation in shape of a container, and a bottom opening formed by cutting has to be closed. Therefore, portions other than the can body are actually difficult to be used for the reason of high cost as a container.

3. SUMMARY OF THE INVENTION

The present inventor has found as the result of repeated various studies that the best way of manufacturing synthetic resin can bodies inexpensively is to stretch blow mold an intermediate member having a shape in conformity with the can body, to form an extended portion, which lower side serves as a flange when molding the intermediate member, at the upper portion of the intermediate member, and to save as small as possible the amount of material used from the extended portion to the mouth portion upwardly of the intermediate member.

It is therefore an object of the present invention to manufacture, by making use of stretch blow molding, a synthetic resin can body which is inexpensive, excellent in various performances, transparent, has gas impermeability, is easy in rolling a metal cover due to a moderate rigidity resulting from biaxial orientation, and is more effective as a body of a can for many kinds of liquids than a can body obtained by vacuum molding a film.

This invention to achieve the above-described objects comprises the steps of molding a parison with a bottom formed of thermoplastic resin such as polyethylene terephthalate, stretch blow molding a bottle-like intermediate member in which an upper end of a body portion is outwardly extended from the preform, and cutting the intermediate member at said extended portion to form a body portion having at least laterally directed flange corresponding to the lower side of the extended portion and a can body in which said body portion and a bottom are integrally formed.

The aforesaid parison can be molded by extruding or injection molding thermoplastic resin such as polyethylene terephthalate, vinyl chloride, polycarbonate, acrylonitrile. In case of injection molding, molding of a parison with a bottom is very easy but in case of extrusion molding, a tubular parison is molded and therefore, it is necessary to use a preliminarily molding mold because of a parison with a bottom to preliminarily mold a parison with a bottom.

The molded parison, after being adjusted to a temperature suitable for stretch blow molding, is stretch blow molded into a bottle-like intermediate member within a mold. The stretch blow molding of said parison is

0140719

6

carried out holding a mouth portion, and other portions except the mouth portion are mechanically axially stretched by a stretching rod and radially stretched by air pressure to form a biaxially oriented bottle-like intermediate member.

The intermediate member has a vertical body wall and a concentric extended portion formed continuous to the upper end of the body wall. Molding from the intermediate member to the can body can be easily carried out by cutting the lower side of the extended portion along the circumference. The extended portion further expanded outwardly from the body portion is biaxially oriented more than the body portion including the lower side left in the periphery of the mouth portion of the body portion as a flange. However, where the end on the body portion under the extended portion is once placed inwardly and the lower side of the extended portion is outwardly formed, the strength of a connection between the upper end of the body wall and the lower side is not only further enhanced but a groove formed in the periphery of the upper end portion of the body portion can be used as a groove for receiving a seam portion of a can later formed.

The synthetic resin can body can be manufactured at a low cost by reducing as small as possible the amount of resins for portions which are disposed as material loss. Since the portion upwardly of the extended portion of the intermediate member is disposed as material loss after cutting, the temperature of a portion under the mouth portion of the parison is adjusted to a temperature higher than that of other portions at the time of controlling the temperature of the parison in accordance with the present invention.

This high temperature portion is stretched into a thiner wall thickness than other portions when the intermediate portion is stretch blow molded, as a consequence of which the amount of resins is reduced.

The step of cutting the intermediate member need not be carried out continuously to the stretch blow molding of the intermediate member but the intermediate member can be cut to form a can body before the content is filled.

The aforesaid cutting is carried out by placing the edge of a cutter disposed in the periphery of the body portion in contact with the lower side of the extended portion in view of the construction of the intermediate member and concentrating the external force on the edge of the cutter. Therefore, the side walls of the extended portion can be formed vertically. Preferably, however, side walls are formed in the form of bellows so that the side walls of the extended portion are pressed and shrunk

0140719

8

by the edge placed in contact with the lower side and the lower side is cut within the reduced dimension.

The wall thickness of a can body capable of being manufactured in accordance with the present invention can be suitably selected according to the contents. Preferably, the wall thickness of the bottom is formed to have a wall thickness which is thicker to some extent than the body portion in view of deformation prevention. Where internal pressure is applied, the bottom is preferably molded into a pressure resisting construction.

The method of the present invention can be carried out by using a well known stretch blow molding machine, for example, a molding machine disclosed in U.S. Patent No. 4,105,391 specification. As for the molding conditions, the conditions used when a biaxially oriented container is molded can be used.

## 4. BRIEF DESCRIPTION OF THE DRAWINGS

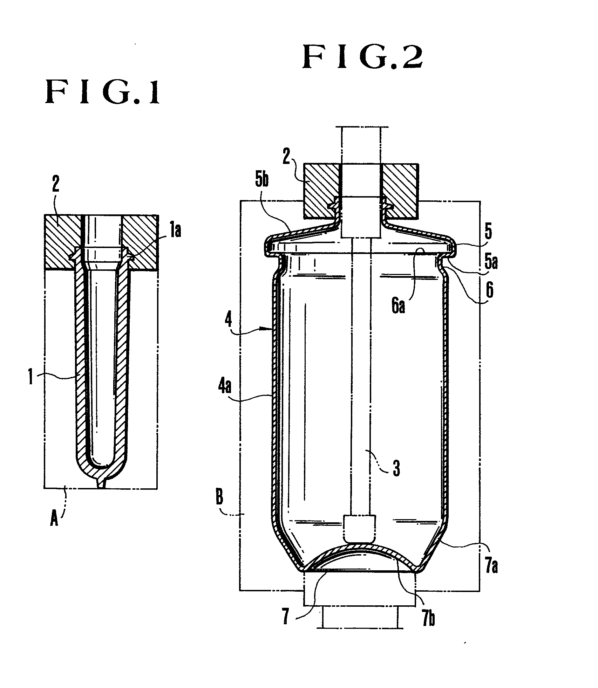

Fig. 1 is a longitudinal sectional view of an injection molded parison with a bottom and a neck mold.

Fig. 2 is a longitudinal sectional view of a stretch blow molded intermediate member and a neck mold.

Fig. 3 is a longitudinal sectional view of a can body formed by cutting an extended portion.

Fig. 4 is a partial sectional view showing a cut portion of an extended portion.

Fig. 5 is a front view of a synthetic resin can manufactured with a can cover seamed to the can body.

Fig. 6 is a partial sectional view showing the rolling state of a peripheral edge of a metal cover and a flange.

Figs. 7 and 8 are respectively partial sectional views showing the cutting state of the lower side of the extended portion in case where side walls of the extended portion are formed expansively.

## 5. DESCRIPTION OF THE PREFERRED EMBODIMENTS

Fig. 1:

Polyethyleneterephthalate is injected into a mold A to form a parison 1 with a bottom. The parison 1 is transferred to a temperature control section while holding a mouth portion la by a neck mold 2 and inserted into a temperature control mold not shown to adjust unevenness of temperature produced at the time of molding and to adjust a parison temperature to a temperature suitable for stretch blow molding. After the temperature control has been made, the preform 1 is transferred to a stretch blowing section while holding the mouth portion la.

Fig. 2:

The parison 1 except the mouth portion la held by the neck mold 2 is inserted into a blow mold B comprising a pair of split molds, which is prepared beforehand. Next, a stretching rod 3 is inserted into the parison 1 from the upper portion of the neck mold 2, and the parison is axially stretched and radially expanded by blowing air therein to form a bottle-like intermediate member 4 integrally provided with an extended portion 5 in the form of a concentric circle on the upper end of a body portion 4a in the form of a circle in cross section. At this time, when an upper end of a body wall under the extended portion 5 is curved inwardly as shown and a lower side 5b of the extended portion 5 is outwardly projected, a connected portion 6a between the body wall and the lower side is further stretched to increase the strength, and a circumferential shallow groove 6 formed thereat can be used as a groove for receiving a seam described later.

A bottom 7 is molded into a pressure resisting construction. While this pressure resisting construction comprises an inclined peripheral wall 7a and an inwardly projected dome-like bottom surface 7b, it will be noted that other constructions can be employed.

The wall thickness of the body portion 4a of the intermediate member 4 molded as described above is almost uniform, and if biaxial orientation is applied thereto, the body portion has the strength despite a thin wall thickness of 0.25 to 0.4 mm and increases its bending stress. Particularly, since the extended portion 5 is stretched more than the body portion 4a, the extended portion is not ruptured even if it is bended.

Where in molding the intermediate member 4, a wall thickness of a portion 5b between the mouth portion 1a and the upper portion of the extended portion 5 is greater than other portions, or a wall thickness of the portion 5b is formed to be thiner than other portions to reduce the amount of resins, temperature under the mouth portion of the parison 1 is set to a higher temperature (above $100^{\circ}C$) than a temperature ($90 - 95^{\circ}C$) of other portions at the time of controlling temperature of parison. This high temperature portion tends to be stretched than other portions when the intermediate member 4 is stretch blow molded, and has a thinner wall thickness than other portions subjected to biaxial orientation, and the amount of resins required therefor is also reduced.

Figs. 3 and 4:

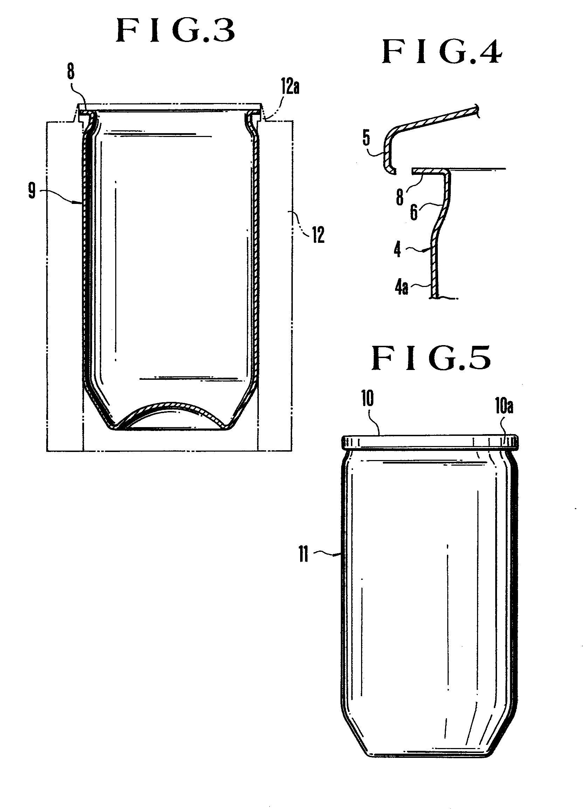

After the intermedimate member 4 has been released from the blow mold B, the intermedimate member 4 is cut at the extended portion 5. This cutting is carried out by removing the intermediate member 4 from the neck mold 2, inserting the intermediate member into a cutter 12 and placing the edge 12a positioned in the periphery of the body portion in contact with the lower side 5a. The cut portion is outside the lower side 5a of the extended portion 5 as shown in Fig. 4, and by cutting, the intermediate member 4 is formed into a can body 9 having a lateral flange 8 on the upper end of the body portion 4a.

The thus molded can body 9 is obtained by subjecting a portion from the end of the flange 8 to the bottom 7 to biaxial orientation and is transparent. The flange 8 can sufficiently withstand bending during rolling. The cut extended portion 5 can be reused as a molding material.

In the above-described embodiment, the bottom 7 is molded into a pressure resisting construction. However, in case the bottom is used for a can for contents in which internal pressure need not be taken into consideration, the construction of the bottom 7 is molded similar to a bottom for a normal synthetic resin bottle or the like.

In case of a can for contents such as fruit juice which requires heating and filling, after the intermediate member 4 has been molded, heat treatment is applied thereto to remove residual strain due to molding so that a can body 9 is not thermally deformed during heating and filling.

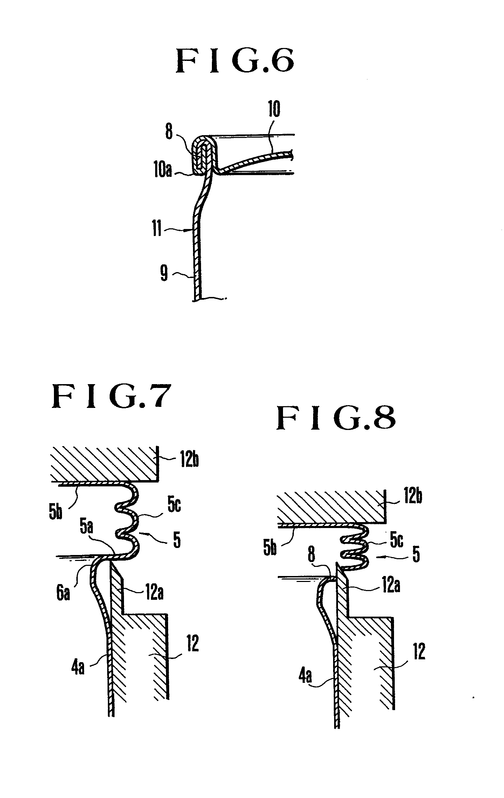

Fig. 5 shows a can 11 manufactured by rolling the flange 8 of the can body 9 together with a normal metal cover 10 having an unsealing member. Sealing of the can body 9 by the metal cover 10 is carried out by rolling a peripheral edge 10a of the metal cover placed on the flange and the flange 8 as shown in Fig. 6 in a normal manner after the content has been filled.

In embodiments shown in Figs. 7 and 8, a side wall 5c of the extended portion 5 is formed into a bellows-like configuration and is made expansively in order that cutting of the lower side 5a by the cutter 12 may be carried out smoothly and the wear of the edge 12a of the cutter 12 may be minimized.

The bellows-like side wall 5c receives an external force applied to the edge 12a in contact with the lower side 5a and is reduced by the external force. As the side wall 5c reduces, the drag in the side wall 5c increases, and therefore, the edge 12a receives the drag and is stealed into the lower side 5a to push and cut the lower side 5a at a position where the side wall 5c is difficult to be reduced.

Accordingly, the lower side 5a is cut before the edge 12a comes into contact with a receiving member 13 arranged frontwardly of the edge 12a, and the cutter 12 comes into contact with the reduced side wall 5c to prevent the cutter 12 from being further moved. As the result, cutting the lower side 5a by the edge 12a is always carried out smoothly, and the wear of the edge 12a

14

is minimized.

As described above, the can body manufactured by the present invention is wholly subjected to biaxial orientation, the can body is excellent in pressure resistance, gas impermeability, transparency, heat resistance, etc. In addition, the amount of resins above the extended portion to be cut can be saved, and therefore, the material loss is reduced. Moreover, since the flange is also subjected to biaxial orientation similar to the body portion, rolling with the metal cover can be done positively, and even if the can body is formed of synthetic resin, complete seaming can be carried out.

0140719

15

WHAT IS CLAIMED IS:

1. A method for manufacturing synthetic resin can bodies, the method comprising molding a parison (1) with a bottom formed of a thermoplastic resin such as polyethyleneterephthalate by injection or extrusion molding; forming said parison into a biaxially oriented bottle-like intermediate body continuously having an extended portion (5) in the form of a concentric circle formed on an upper end of a body portion (4a) by expanding it further outwardly of said body portion using a blow mold and a stretching rod prepared beforehand; cutting said intermediate member at a lower end of said extended portion; and obtaining a can body in which a bottom and a body portion (9) are integral with each other and having at least a laterally directed biaxially oriented flange (8) by said lower side in an open peripheral edge of the body portion.

2. The method for manufacturing synthetic resin can bodies according to claim 1, wherein in stretch blow molding said intermediate member, an upper end of the body portion (4a) is inwardly curved and connected to the lower side (5a) of said extended portion to increase the strength of a connected portion of a body wall and said lower side, and a seam receiving shallow groove (6) is formed in the upper end of the body portion.

3. The method for manufacturing synthetic resin can bodies according to claim 1, wherein in stretch blow molding said intermediate member, side walls of said extended portion (5) are expansively molded.

4. The method for manufacturing synthetic resin can bodies according to claim 1, wherein in stretch blow molding said intermediate portion, an underside of a mouth portion (1a) of the parison forming an upper portion of said extended portion (5) is heated to a temperature higher than that of other portions, and at the time of molding the intermediate member, the upper portion of the extended portion is formed to be thin in wall thickness to reduce the amount of resins.

# F I G.1

# F I G.2

# FIG.3

# FIG.4

# FIG.5

# F I G.6

# F I G.7

# F I G.8

European Patent Office

## EUROPEAN SEARCH REPORT

. Application number

| | DOCUMENTS CONSIDERED TO BE RELEVANT | | EP 84401538.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | GB - A - 2 104 825 (PLASTONA) <br> * Totality * <br> -- | 1-3 | B 29 C 49/02 |
| A | US - A - 3 711 233 (UHLIG) <br> * Totality * <br> -- | 1 | |
| A | US - A - 3 752 627 (BOURGEOIS) <br> * Totality * <br> -- | 1 | |
| A | US - A - 2 962 758 (POLITIS) <br> * Totality * <br> ---- | | |
| | | | TECHNICAL FIELDS SEARCHED (Int. Cl.4) |
| | | | B 29 C |

The present search report has been drawn up for all claims

| Place of search | Date of completion of the search | Examiner |
|---|---|---|
| VIENNA | 11-01-1985 | REININGER |